# EUROPEAN PATENT SPECIFICATION

(11) **EP 4 152 699 B1**
(45) Date of publication and mention of the grant of the patent: **29.04.2026**
(21) Application number: 21197647.7
(22) Date of filing: 20.09.2021
(51) Int. Cl.: H04L 12/40

(54) **DETECTING CONFIGURATION ERRORS IN A BUS CONTROL SYSTEM**
ERKENNUNG VON KONFIGURATIONSFEHLERN IN EINEM BUSSTEUERUNGSSYSTEM
DÉTECTION DES ERREURS DE CONFIGURATION DANS UN SYSTÈME DE COMMANDE DE BUS

(43) Date of publication of application: 22.03.2023
(73) Proprietor: CAME S.p.A., 31030 Dosson di Casier (TV) (IT)
(72) Inventor: TOMAELLO, Andrea, 30037 SCORZE (IT); LAZZARINI, Diego, 35035 MESTRINO (IT)
(74) Representative: Savi, Massimiliano

(56) References cited:
- CN-B- 110 061 896
- KR-B1- 102 048 635
- US-A1- 2013 326 099
- US-A1- 2015 124 597

## Description

### FIELD OF THE INVENTION

The invention relates to the sector of automation of doors, gates, and similar barrier devices typically used to close access gates, e.g., access gates to garages or, more generally, to delimited areas.

### PRIOR ART

In control systems of doors, gates, rolling shutters, and similar barrier devices, it is customary to connect the various units which form the system to a control unit by means of electrical wires.

In a domestic installation, such units may be, for example, a motor for one leaf of a gate, a motor for the other leaf of the gate, a motor for a garage door, a radio receiver for receiving the requests to open/close the gate and the door from a remote control, key selectors and/or control keypads for operating the motors, safety systems, presence detectors, e.g., photocells or sensitive edges, light and/or sound signaling devices.

It is known to use bus configurations in which all devices are connected in parallel to the control unit through the use of a single pair of conductors to reduce the number of wires to be used and thus simplify the wiring. An example of a bus system is described in U.S. Patent 7091687.

In this system, the communication between the control unit and the peripheral devices takes place using the so-called master/slave technique, in which the master is the control unit and the slaves are the peripheral devices. This technique provides that any command or status information traveling on the bus is handled by the control unit. Indeed, the peripheral devices can occupy the bus only following a request sent by the control unit itself, in the form of a query or command, to each device. If it is a command, e.g., such as a command to actuate a motor to open a gate, the device will respond by confirming, i.e., with an acknowledge signal. If it is a request for status, e.g., concerning the possible presence of an obstacle that interrupts the light beam of a photocell, the device will respond by sending the requested status information directly. Such a communication protocol thus requires each peripheral device to be associated with a unique address that the control unit uses to identify the recipient of its message, either commands or status requests, and that no device can speak unless it is addressed by the control unit.

The address is assigned to each device during system installation, e.g., by manually setting a binary code using switches, dip switches, bridges, resistors, and similar devices. More advanced versions provide for the storage of such a code in non-volatile memory devices, e.g., flash type, or volatile memory devices powered by a buffer battery.

On the other hand, since this is a manual procedure, it is easy for errors to occur and for several devices to be configured with the same address, causing the system to malfunction.

In this case, it is necessary to intervene on the system, checking every single device to understand which one has a duplicated address and correct it with an evident waste of time and increase of costs.

Furthermore, patent document US2013/326099 discloses a method for automatically allocating addresses in a CAN network having at least one master bus user and at least one slave bus user; patent document CN110061896 describes a method to detect address collision between MODBUS-RTU bus slave users, and patent document KR102048635 discloses a method for autonomously setting identifiers which are not overlapped with each other in nodes connected to a bus.

It is the object of the present invention to provide a device control system for access gates which can automatically diagnose and identify the presence of devices having a duplicated address to allow for simple and quick action to correct the problem.

### BRIEF DESCRIPTION OF THE INVENTION

The invention achieves the object with a control system for access gate devices, such as gates, doors, mobile barriers, and the like, comprising
a communication bus, a control unit interfaced with the communication bus to transmit/receive digital information, a plurality of peripheral units interfaced with the communication bus to transmit/receive digital information to/from the control unit.

The communication protocol on the communication bus is preferably of the master/slave type with the control unit being the master and the peripheral units being the slaves. Each slave is identified by a code, which code is used by the control unit to communicate with the corresponding peripheral unit.

The control unit has the characteristic of being configured to send to each peripheral unit, e.g. following communication errors detected on the bus, a diagnostic signal containing a request to send by the peripheral unit a corresponding status or identification message, waiting to receive said status or identification message for a predetermined period of time so as to be able to activate an alarm signal if said status or identification message either is not received in said period of time or is not comprehensible.

By generating collisions on the communication bus, the presence of units with duplicated addresses can be readily identified, e.g., during system testing.

It is also possible to identify which peripheral units are associated with the same address. For this purpose, the control unit may be advantageously configured to send a deactivation and/or alarming command to the peripheral unit from which the status or identification message either was not received or was received but incomprehensible.

In an embodiment, the peripheral units either comprise or are associated with a light or sound signaling device, activatable when the corresponding peripheral unit receives an alarm command from the control unit.

In this manner, the technician can readily identify which peripheral units have the same address by the associated light or sound signal.

### BRIEF DESCRIPTION OF THE FIGURES

Further objects, features, and advantages of the present invention will be more apparent from the following detailed description provided by way of nonlimiting example and illustrated in the accompanying figures, in which:
Fig. 1 shows an exemplary diagram of a system for controlling the movement of a movable barrier.
Fig. 2 shows the typical timing of messages transiting over a bus in the system in the preceding figure.
Fig. 3 shows the timing of a bus communication system with management of the conflict between addresses according to an embodiment of the invention.
Fig. 4 shows the timing of a bus communication system in which each peripheral device transmits in a predetermined time window starting from the reception of the status request message with a highlighted conflict between two slaves.

The following description of exemplifying embodiments relates to the accompanying drawings. The same reference numbers in the various drawings identify the same elements or similar elements. The following detailed description does not limit the invention. The scope of the invention is defined by the appended claims.

### DETAILED DESCRIPTION OF THE INVENTION

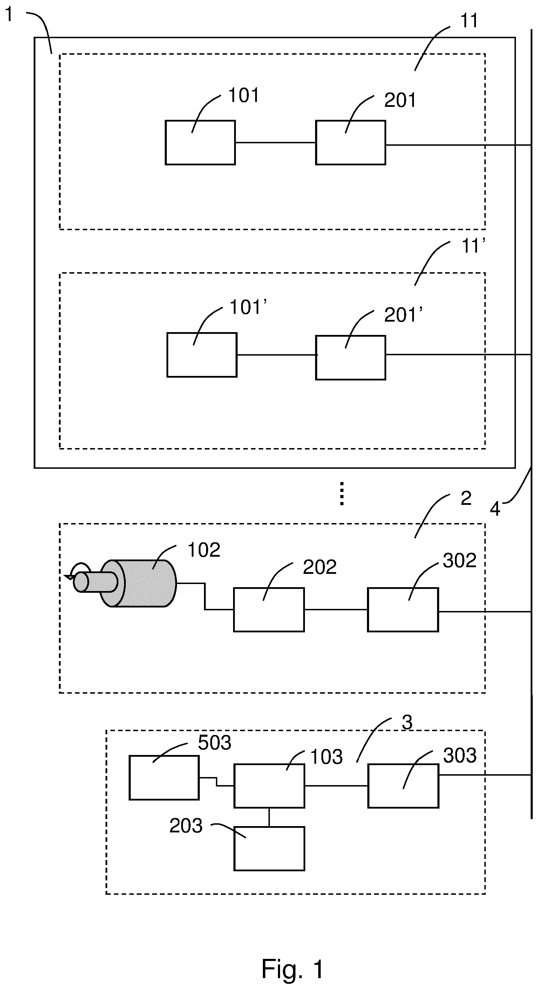

With reference to fig. 1, a system for controlling the movement of a movable barrier, such as a gate, a barrier, a door, and the like comprises a bus 4 to which a barrier opening/closing movement module 2, a central control module 3, and a photocell presence detector device 1 are connected.

The photocell device 1 comprises an optical transmitter 101 and a corresponding optical receiver 101' coupled so that the receiver 101' can detect when the light beam emitted by the transmitter 101 does not reach the receiver 101', e.g., due to the presence of an obstacle between the two. The photocell devices are used to signal the presence of a vehicle or person in the immediate vicinity of the barrier to allow the system to act safely. The optical transmitter 101 and the optical receiver 101' typically belong to separate devices 11, 11' each provided with interface electronics 201, 201' towards the bus 4.

The moving module 2 comprising a motor 102, a motor control device 202, and a port 302 for receiving a barrier movement command through the bus 4.

The central control module 3 comprises a central unit 103, an input 203, and an interface port 303 towards the bus 4.

The central unit 103 is configured to read barrier movement commands from the input 203 and correspondingly send actuation signals to the motor control device 202 by means of the bus 4 as well as read the status of the photocell device 1 to promptly interrupt the movement of the barrier if the presence of a vehicle is detected, e.g., by obscuring the passage of the light beam from the photo-transmitter 101 to the photo-receiver 101'.

The communication system 4 is advantageously a bus communication system with a master/slave type protocol, the central unit 103 being the master, the motor control device 2, and the photocell devices 11, 11' being corresponding slaves which receive commands from, and send states to, said master. There can be further slave devices interfaced with the bus, e.g., such as further photocell devices, sensitive edge devices, foot-operated presence detectors, radar presence detectors, signaling devices, and other devices typical in this type of system. The same input 203 of the central unit 3 may be flanked or replaced by a slave-type input device interfaced with the central unit 3 through the bus 4, e.g., such as a key switch, a control keypad, a remote control receiver, and similar devices.

The bus system can advantageously exploit the communication through only two electrical wires according to the teachings of US 7091687.

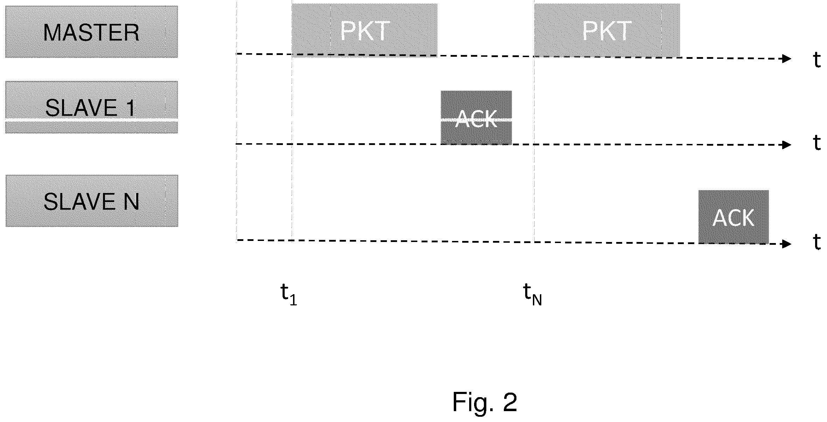

In the systems according to the prior art, the master sends commands, e.g., to the movement module 2, or status requests, e.g., to the photocell module 1, through messages having a coding which univocally identifies the peripheral device receiving the communication. In the case of a command, the device to which the command is sent will execute the command and send an acknowledge signal to the master accordingly. In the case of a status request, the device to which this request is addressed will directly respond by sending the requested status. The photocell devices, for example, when queried, will signal the master whether the optical coupling between each transmitter/receiver pair is interrupted or intact. Fig. 2 shows such a communication protocol in which PKT indicates the package sent by the master at various instants tᵢ to each of the n devices and with ACK the package sent in reply by each device to the master.

To exchange digital information over the bus, each peripheral device is associated with an identification code to be used as an address.

The address is generally assigned to each device during system installation, e.g., by manually setting a binary code using switches, dip switches, bridges, resistors, and similar devices. More advanced versions provide for the storage of such code in non-volatile memory devices, e.g., EPROM, EEPROM, flash type, or volatile memory devices of the RAM type, e.g., powered by a buffer battery.

The message sent by the master contains the univocal code associated with each device. This is an address which is generally encapsulated in the message header. Each slave reads the header of the messages transiting on the bus and sends an acknowledge or status signal on the bus when the code in the header is recognized as the identifier of the device at issue. If two devices have the same address, both will provide acknowledgment or status signals which, by overlapping, will be incomprehensible to the master.

Hence, the idea underlying the invention of generating collisions on the bus to identify a conflict situation between slave device addresses.

Indeed, by sending commands which sequentially query all device addresses in the system and waiting for an acknowledge signal for a given period of time, it is possible to establish not only whether there is an address conflict, but also which devices are concerned by the conflict.

Once the conflict on an address has been identified, the master can send a command with the same address which puts the devices in an alarm state thus identifying them.

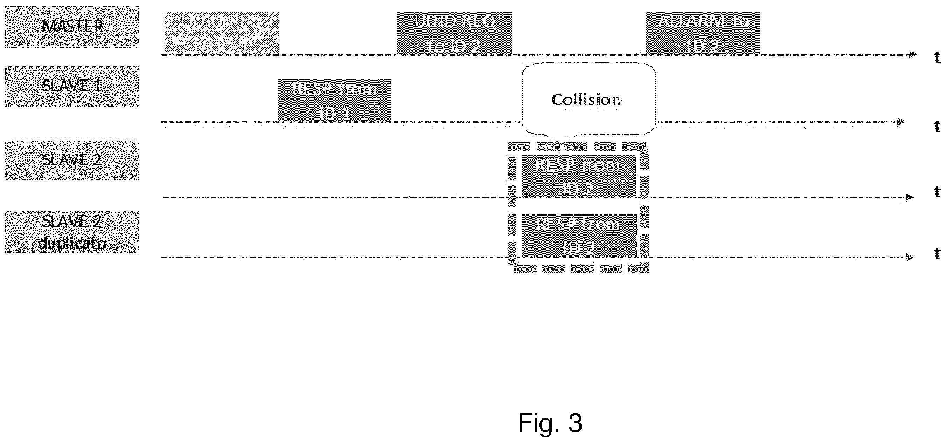

The diagram in Fig. 3 summarizes this procedure in an illustrative manner. The master sends an identification request to the slave with address "1", e.g., due to the detection of a communication error. The slave responds, e.g., by replicating its identifier, serial number, or a random number. After receiving the answer from slave "1", the master sends an identification request to the slave with address "2". In this case, since there are two devices with the same address (Slave "2" and duplicated Slave "2"), each of them responds by creating a collision between the response messages. Since the slave messages are different, this determines the presence on the bus of an anomalous message that the master cannot identify as coming from the interrogated slave. It can also happen that the two messages cancel each other at least partially with the result that, after a given listening time window, the master either did not receive or could not decipher the possible received message. This is indicative of the presence of a fault or configuration error when the system was installed.

The next step will be that the master has to send an alarm command to the abnormal address, in this case "2". The result will be that both devices "2" and "duplicated 2" will receive this command and go into an alarm state. This may include the simple deactivation as well as, either additionally or alternatively, the activation of a light and/or sound signal on the device at issue.

For example, by turning on a light or beacon associated with the device with an abnormal address, an installer or maintainer can immediately identify the pair of devices which have the same address by the presence of such a light signaling device.

If the system comprises an intelligent smart light signaling device, e.g., such as the one described in the European patent application EP4027313 by the owner, the central unit can be configured to drive the lighting element so as to set light patterns of shape and/or color and/or intensity such as to signal the presence of devices with duplicated address in the system ultimately leaving the identification of the devices to the specific signaling on the devices themselves for a prompt resolution of the problem.

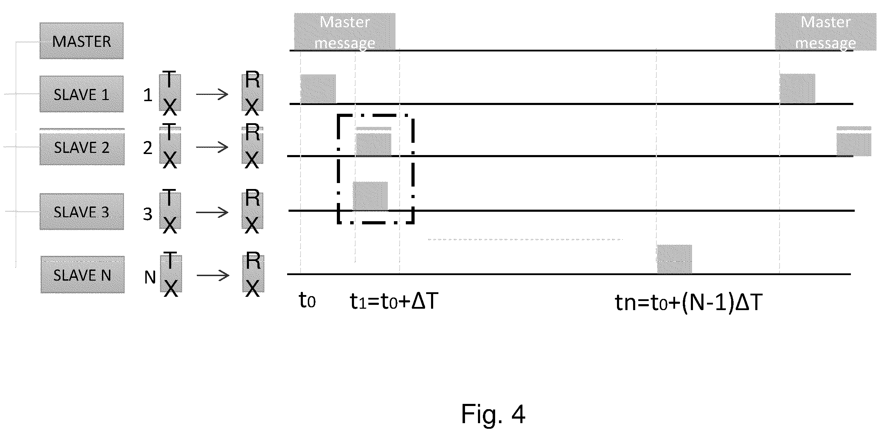

Fig. 4 shows an alternative communication protocol in which the status request message from the master is one for all slaves (e.g., photocells) according to the teachings of the European patent application EP 2119125. The drawback of needing to send a status request to each device is avoided in this manner. The master can recognize which device the message is coming from because each device transmits in a predetermined time window starting from the reception of the status request message. By assigning different time windows to each device during system installation, the master can recognize the origin of the message. In the figure, the windows all have the same duration equal to ΔT and a time delay equal to tᵢ=t₀+(i-1)ΔT relative to the message sent by the master at time t₀, where i denotes the i-th device.

In this case, the conflict may arise if two or more devices are assigned the same time windows. This may be the case, for example, if such assignment is made on the basis of univocal identification addresses. If two devices have the same addresses, the associated windows will also be the same. In the example shown in the figure, the conflict occurs between the devices 2 and 3 (typically photocells) which respond in the same time window.

The operating principle for revealing this conflict is a variation of what described above. After sending a single identification request command, each device will respond in its own window. If two devices are associated with the same window, the master will not be able to receive an understandable message in that specific window and will infer the presence of a conflict. It will then proceed by sending a specific alarm message to the devices associated with that window as in the previous case.

For the central unit 3 to be able to establish the time windows associated with each device 1, 2, during system configuration, the number of peripheral units and the relative absolute transmission delay, as well as the address of each peripheral, is stored in a memory element 503 associated with the central unit 3.

The invention further relates to a method for detecting configuration errors of a control system for access gate devices, such as gates, doors, mobile barriers, and the like of the type described above, wherein the following steps are provided:
- assigning different identification addresses to each device and the control unit;
- sending a status request or identification command to each peripheral unit in the system;
- waiting for the receipt of said status or identification message for a set period of time;
- activating a collision alarm signal between different device addresses if said status or identification message is either not received in said period of time or not comprehensible.

The status request or identification command can advantageously be sent to each peripheral unit in the system following the detection of communication errors. In this manner, it is possible to check whether these errors are due to the presence of duplicated addresses.

The step of sending a deactivation and/or alarming command to the peripheral unit from which the status or identification message either was not received or was received but is not comprehensible may be advantageously provided.

Such a command can be, for example, interpreted by the peripheral units as a command to activate a light or sound signaling device associated with each peripheral unit to allow easy identification of units with duplicated addresses or in any case not operating correctly.

## Claims

1. A control system for controlling access gate devices, such as gates, doors, mobile barriers, and the like, comprising:
a communication bus (4);
a control unit (3) interfaced with the communication bus (4) to transmit/receive digital information;
a plurality of peripheral units (1, 2) interfaced with the communication bus (4) to transmit/receive digital information to/from the control unit (3), wherein the communication protocol on the communication bus (4) is of the master/slave type with the control unit (3) being the master and the peripheral units (1, 2) being the slaves;
each peripheral unit is identified by a code, which code is used by the control unit (3) to communicate with the corresponding peripheral unit (1, 2);
at least some of the peripheral units (1) are associated with different time windows within which said peripheral units (1) transmit status information to the control unit (3), said control unit (3) being able to recognize from which peripheral unit the message originates by the delay with which said status message is received by the control unit (3), and
the control unit (3) is configured to send to each peripheral unit (1, 2) a diagnostic signal containing a request to send by the peripheral unit (1, 2) a corresponding status or identification message, the control unit (3) waiting to receive said status or identification message for at least one of said time windows so as to be able to activate an alarm signal if said status or identification message either is not received in said at least one of said time windows or is not comprehensible.

2. The system according to claim 1, wherein the status or identification message of each peripheral unit (1, 2) is different from the status or identification message of the other peripheral units (1, 2).

3. The system according to one or more of the preceding claims, wherein the control unit is configured to send the diagnostic signal as a result of communication errors detected on the communication bus.

4. The system according to one or more of the preceding claims, wherein the control unit (3) is configured to send a deactivation and/or alarming command to the peripheral unit (1, 2) from which the status or identification message was either not received or received but is not comprehensible.

5. The system according to one or more of the preceding claims, wherein the peripheral units (1, 2) either comprise or are associated with a light or sound signaling device, said signaling device being activatable when the corresponding peripheral unit receives an alarm command from the control unit (3).

6. The system according to any one or more of the preceding claims, wherein the peripheral units (1, 2) comprise an intelligent light signaling device, the central unit being configured to drive the lighting element so as to set light patterns of shape and/or color and/or intensity such to signal the presence of devices with a duplicated address.

7. A method for detecting configuration errors in the system for controlling access gate devices, such as gates, doors, mobile barriers, and the like according to any of the preceding claims, the method comprising the steps of:
- sending the status request or identification command to each peripheral unit in the system;
- waiting for the reception of said status or identification message for at least one of said time windows;
- activating the collision alarm signal between different device addresses if said status or identification message is either not received in at least one of said time windows or not comprehensible.

8. The method according to claim 7, wherein the step of sending the status request or identification command to each peripheral unit of the system is provided upon detection of communication errors on the bus.

9. The method according to claim 7 or 8, further comprising the step of sending a deactivation and/or alarming command to the peripheral unit from which the status or identification message either was not received or was received but incomprehensible.

10. The method according to claim 9, wherein said deactivation and/or alarming command is interpreted by the peripheral units as a command to activate a light or sound signaling device associated with each peripheral unit.

## Patentansprüche

1. Steuerungssystem zum Steuern von Zugangstorvorrichtungen, wie Tore, Türen, mobile Schranken und dergleichen, umfassend:
einen Kommunikationsbus (4);
eine Steuerungseinheit (3), die mit dem Kommunikationsbus (4) verbunden ist, um digitale Informationen zu übertragen/empfangen;
eine Vielzahl von Peripherieeinheiten (1, 2), die mit dem Kommunikationsbus (4) zum Übertragen/Empfangen von digitalen Informationen an die/von der Steuerungseinheit (3) verbunden ist, wobei das Kommunikationsprotokoll auf dem Kommunikationsbus (4) vom Master-/Slave-Typ ist, wobei die Steuerungseinheit (3) der Master ist und die Peripherieeinheiten (1, 2) die Slaves sind;
jede Peripherieeinheit durch einen Code identifiziert wird, wobei der Code von der Steuerungseinheit (3) zum Kommunizieren mit der entsprechenden Peripherieeinheit (1, 2) verwendet wird; wobei zumindest einige der Peripherieeinheiten (1) verschiedenen Zeitfenstern zugeordnet sind, innerhalb der die Peripherieeinheiten (1) Statusinformationen an die Steuerungseinheit (3) übertragen, wobei die Steuerungseinheit (3) in der Lage ist, anhand der Verzögerung, mit der die Statusnachricht von der Steuerungseinheit (3) empfangen wird, zu erkennen, von welcher Peripherieeinheit die Nachricht stammt, und
die Steuerungseinheit (3) dazu konfiguriert ist, an jede Peripherieeinheit (1, 2) ein Diagnosesignal zu senden, das eine Anfrage an die Peripherieeinheit (1, 2) enthält, eine entsprechende Status- oder Identifikationsnachricht zu senden, wobei die Steuerungseinheit (3) auf den Empfang der Status- oder Identifikationsnachricht für mindestens eines der Zeitfenster wartet, um in der Lage zu sein, ein Alarmsignal zu aktivieren, wenn die Status- oder Identifikationsnachricht entweder nicht in mindestens einem der Zeitfenster empfangen wird oder nicht verständlich ist.

2. System nach Anspruch 1, wobei sich die Status- oder Identifikationsnachricht jeder Peripherieeinheit (1, 2) von der Status- oder Identifikationsnachricht der anderen Peripherieeinheiten (1, 2) unterscheidet.

3. System nach einem oder mehreren der vorhergehenden Ansprüche, wobei die Steuerungseinheit dazu konfiguriert ist, das Diagnosesignal als Ergebnis von auf dem Kommunikationsbus erkannten Kommunikationsfehlern zu senden.

4. System nach einem oder mehreren der vorhergehenden Ansprüche, wobei die Steuerungseinheit (3) dazu konfiguriert ist, einen Deaktivierungs- und/oder Alarmierungsbefehl an die Peripherieeinheit (1, 2) zu senden, von der die Status- oder Identifikationsnachricht entweder nicht empfangen wurde oder empfangen wurde, aber nicht verständlich ist.

5. System nach einem oder mehreren der vorhergehenden Ansprüche, wobei die Peripherieeinheiten (1, 2) entweder eine Licht- oder Tonsignalvorrichtung umfassen oder einer solchen zugeordnet sind, wobei die Signalvorrichtung aktivierbar ist, wenn die entsprechende Peripherieeinheit einen Alarmbefehl von der Steuerungseinheit (3) empfängt.

6. System nach einem oder mehreren der vorhergehenden Ansprüche, wobei die Peripherieeinheiten (1, 2) eine intelligente Lichtsignalvorrichtung umfassen, wobei die Zentraleinheit dazu konfiguriert ist, das Beleuchtungselement so zu betreiben, dass Lichtmuster in Form und/oder Farbe und/oder Intensität eingestellt werden, um das Vorhandensein von Vorrichtungen mit einer doppelten Adresse zu signalisieren.

7. Verfahren zur Erkennung von Konfigurationsfehlern in dem System zum Steuern von Zugangstorvorrichtungen, wie Tore, Türen, mobile Schranken und dergleichen, nach einem der vorhergehenden Ansprüche, wobei das Verfahren die Schritte umfasst:
- Senden der Statusabfrage oder des Identifikationsbefehls an jede Peripherieeinheit in dem System;
- Warten auf den Empfang der Status- oder Identifikationsnachricht für mindestens eines der Zeitfenster;
- Aktivieren des Kollisionsalarmsignals zwischen verschiedenen Vorrichtungsadressen, wenn die Status- oder Identifikationsnachricht entweder nicht in mindestens einem der Zeitfenster empfangen wird oder nicht verständlich ist.

8. Verfahren nach Anspruch 7, wobei der Schritt des Sendens der Statusabfrage oder des Identifikationsbefehls an jede Peripherieeinheit des Systems bei Erkennung von Kommunikationsfehlern auf dem Bus vorgesehen wird.

9. Verfahren nach Anspruch 7 oder 8, ferner umfassend den Schritt des Sendens eines Deaktivierungs- und/oder Alarmierungsbefehls an die Peripherieeinheit, von der die Status- oder Identifikationsnachricht entweder nicht empfangen wurde oder empfangen wurde, aber nicht verständlich ist.

10. Verfahren nach Anspruch 9, wobei der Deaktivierungs- und/oder Alarmierungsbefehl von den Peripherieeinheiten als Befehl interpretiert wird, eine jeder Peripherieeinheit zugeordnete Licht- oder Tonsignalvorrichtung zu aktivieren.

## Revendications

1. Système de contrôle pour des dispositifs de porte d'accès, tels que des portails, des portes, des barrières mobiles et similaires, comprenant :
un bus de communication (4) ;
une unité de commande (3) interfacée avec le bus de communication (4) pour transmettre/recevoir des informations numériques ;
une pluralité d'unités périphériques (1, 2) interfacées avec le bus de communication (4) pour transmettre/recevoir des informations numériques vers/depuis l'unité de commande (3), dans lequel le protocole de communication sur le bus de communication (4) est du type maître/esclave, l'unité de commande (3) étant le maître et les unités périphériques (1, 2) étant les esclaves ;
chaque unité périphérique est identifiée par un code, lequel code est utilisé par l'unité de commande (3) pour communiquer avec l'unité périphérique correspondante (1, 2) ; au moins certaines des unités périphériques (1) sont associées à différentes fenêtres temporelles dans lesquelles lesdites unités périphériques (1) transmettent des informations d'état à l'unité de commande (3), ladite unité de commande (3) étant capable de reconnaître de quelle unité périphérique provient le message par le retard avec lequel ledit message d'état est reçu par l'unité de commande (3), et
l'unité de commande (3) est configurée pour envoyer à chaque unité périphérique (1, 2) un signal de diagnostic contenant une demande d'envoi par l'unité périphérique (1, 2) d'un message d'état ou d'identification correspondant, l'unité de commande (3) attendant de recevoir ledit message d'état ou d'identification pendant au moins une desdites fenêtres temporelles afin de pouvoir activer un signal d'alarme si ledit message d'état ou d'identification n'est pas reçu dans ladite au moins une desdites fenêtres temporelles ou n'est pas compréhensible.

2. Système selon la revendication 1, dans lequel le message d'état ou d'identification de chaque unité périphérique (1, 2) est différent du message d'état ou d'identification des autres unités périphériques (1, 2).

3. Système selon une ou plusieurs des revendications précédentes, dans lequel l'unité de commande est configurée pour envoyer le signal de diagnostic à la suite d'erreurs de communication détectées sur le bus de communication.

4. Système selon une ou plusieurs des revendications précédentes, dans lequel l'unité de commande (3) est configurée pour envoyer une commande de désactivation et/ou d'alarme à l'unité périphérique (1, 2) à partir de laquelle le message d'état ou d'identification n'a pas été reçu ou reçu mais n'est pas compréhensible.

5. Système selon une ou plusieurs des revendications précédentes, dans lequel les unités périphériques (1, 2) comprennent ou sont associées à un dispositif de signalisation lumineuse ou sonore, ledit dispositif de signalisation pouvant être activé lorsque l'unité périphérique correspondante reçoit une commande d'alarme de l'unité de commande (3).

6. Système selon l'une quelconque ou plusieurs des revendications précédentes, dans lequel les unités périphériques (1, 2) comprennent un dispositif de signalisation lumineuse intelligent, l'unité centrale étant configurée pour commander l'élément d'éclairage de manière à définir des motifs lumineux de forme et/ou de couleur et/ou d'intensité de manière à signaler la présence de dispositifs avec une adresse dupliquée.

7. Procédé pour détecter des erreurs de configuration dans le système de contrôle de dispositifs de porte d'accès, tels que des portails, des portes, des barrières mobiles et similaires selon l'une quelconque des revendications précédentes, le procédé comprenant les étapes consistant à :
- envoyer la demande d'état ou la commande d'identification à chaque unité périphérique du système ;
- attendre la réception dudit message d'état ou d'identification pendant au moins une desdites fenêtres temporelles ;
- activer le signal d'alarme de collision entre différentes adresses de dispositif si ledit message d'état ou d'identification n'est pas reçu dans au moins une desdites fenêtres temporelles ou n'est pas compréhensible.

8. Procédé selon la revendication 7, dans lequel l'étape d'envoi de la demande d'état ou de la commande d'identification à chaque unité périphérique du système est prévue lors de la détection d'erreurs de communication sur le bus.

9. Procédé selon la revendication 7 ou 8, comprenant en outre l'étape consistant à envoyer une commande de désactivation et/ou d'alarme à l'unité périphérique à partir de laquelle le message d'état ou d'identification n'a pas été reçu ou a été reçu mais incompréhensible.

10. Procédé selon la revendication 9, dans lequel ladite commande de désactivation et/ou d'alarme est interprétée par les unités périphériques comme une commande pour activer un dispositif de signalisation lumineuse ou sonore associé à chaque unité périphérique.
